(19) Europäisches Patentamt
European Patent Office
Office européen des brevets

(11) **EP 4 786 117 A1**

(12) **EUROPÄISCHE PATENTANMELDUNG**

(43) Veröffentlichungstag:
**05.08.2026 Patentblatt 2026/32**

(21) Anmeldenummer: **26155804.3**

(22) Anmeldetag: **02.02.2026**

(51) Internationale Patentklassifikation (IPC):
**B25J 9/16** (2006.01) **G05B 19/42** (2006.01)

(52) Gemeinsame Patentklassifikation (CPC):
**B25J 9/1694; B25J 9/1684; G05B 19/4207;**
G05B 2219/37043; G05B 2219/37405;
G05B 2219/39529; G05B 2219/40541;
G05B 2219/40543; G05B 2219/40564;
G05B 2219/40582; G05B 2219/45061

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **03.02.2025 DE 102025103918**

(71) Anmelder: **Deutsches Zentrum für Luft- und
Raumfahrt e.V.
53227 Bonn (DE)**

(72) Erfinder:
• **Iskandar, Maged
82234 Weßling (DE)**
• **Dietrich, Alexander
82234 Weßling (DE)**
• **Nottensteiner, Krobinian
82234 Weßling (DE)**
• **Bachmann, Timo
82234 Weßling (DE)**

(74) Vertreter: **Ege Lee & Roider Patentanwälte
Wilhelm-Wagenfeld-Straße 24
80807 München (DE)**

(54) **VERFAHREN ZUM ROBOTERGESTÜTZTEN SCANNEN EINES DREIDIMENSIONALEN OBJEKTS, ROBOTER UND COMPUTERPROGRAMM**

(57) Verfahren zum robotergestützten Scannen eines dreidimensionalen Objekts (100), wobei eine Sondierungsbewegung ausgeführt wird, um Kontakt mit einer Objektoberfläche zu suchen, während dem Ausführen der Sondierungsbewegung vom Roboter (102) bereitgestellte Kraft- und/oder Drehmomentinformationen verwendet werden, um einen Kontakt zu erkennen, nach Erkennen eines Kontakts Kontaktinformationen erfasst und/oder ermittelt werden und unter Berücksichtigung erfasster und/oder ermittelter Kontaktinformationen ein Scanergebnis ermittelt wird, Roboter (102) mit wenigstens einem Kraft- und/oder Drehmomentsensor und einer Kontrolleinrichtung, wobei der Roboter (102) zum Ausführen eines derartigen Verfahrens ausgelegt und/oder angeordnet ist, und Computerprogramm zum robotergestützten Scannen eines dreidimensionalen Objekts (100), wobei das Computerprogramm Programmcodeabschnitte umfasst, mit denen ein derartiges Verfahren ausführbar ist, wenn das Computerprogramm auf einer Kontrolleinrichtung eines Roboters (102) ausgeführt wird.

Fig. 1

**Beschreibung**

Die Erfindung betrifft ein Verfahren zum robotergestützten Scannen eines dreidimensionalen Objekts. Außerdem betrifft die Erfindung einen Roboter mit wenigstens einem Kraft- und/oder Drehmomentsensor und einer Kontrolleinrichtung. Außerdem betrifft die Erfindung ein Computerprogramm zum robotergestützten Scannen eines dreidimensionalen Objekts.

Aus dem Dokument DE 10 2021 113 636 B3 ist ein Verfahren bekannt zum Bestimmen externer Interaktionskräfte und/oder Interaktionsmomente eines Roboters mithilfe wenigstens eines realen Kraft- und/oder Momentsensors und eines Modells des wenigstens einen Kraft- und/oder Momentsensors, bei dem der wenigstens eine reale Kraft- und/oder Momentsensor als passives mechanisch gebundenes Gelenk zusammen mit einer Roboterdynamik und einer Roboterkinematik modelliert wird.

Die Veröffentlichung M. Iskandar, C. Ott, A. Albu-Schäffer, B. Siciliano and A. Dietrich, "Hybrid Force-Impedance Control for Fast End-Effector Motions," in IEEE Robotics and Automation Letters, vol. 8, no. 7, pp. 3931-3938, July 2023, doi: 10.1109/LRA.2023.3270036, betrifft eine hybride Kraft-Impedanz-Steuerung für schnelle Endeffektor-Bewegungen und stellt einen erweiterten kartesischen Impedanzkontrollalgorithmus vor, der geometrische Constraints einbezieht und eine explizite Kraftverfolgung auf hybride Weise ermöglicht. Das vereinheitlichte Framework bietet nachgiebiges Verhalten in den freien (Bewegungs-)Richtungen der Aufgabe und explizite Kraftverfolgung in den eingeschränkten Richtungen. Vorteilhaft ist, dass der involvierte Kraftunterraum in Kontaktrichtung vollständig dynamisch von der Dynamik im Bewegungsunterraum entkoppelt ist. Die experimentelle Validierung mit einem drehmomentgesteuerten Robotermanipulator auf ebenen und gekrümmten Oberflächen demonstriert die Leistungsfähigkeit bei hochdynamischen Wunschtrajektorien und bestätigt die theoretischen Aussagen des Ansatzes.

Der Erfindung liegt die Aufgabe zugrunde, ein eingangs genanntes Verfahren strukturell und/oder funktionell zu verbessern. Außerdem liegt der Erfindung die Aufgabe zugrunde, einen Roboter bereit zu stellen, mit dem das erfindungsgemäße Verfahren ausführbar ist. Außerdem liegt der Erfindung die Aufgabe zugrunde, ein Computerprogramm bereit zu stellen, mit dem das erfindungsgemäße Verfahren ausführbar ist.

Die Aufgabe wird gelöst mit einem Verfahren mit den Merkmalen des Anspruchs 1. Außerdem wird die Aufgabe gelöst mit einem Roboter mit den Merkmalen des Anspruchs 11. Außerdem wird die Aufgabe gelöst mit einem Computerprogramm mit den Merkmalen des Anspruchs 12. Vorteilhafte Ausführungen und/oder Weiterbildungen sind Gegenstand der Unteransprüche.

Das erfindungsgemäße Verfahren ist dazu ausgelegt, ein dreidimensionales Objekt roboterunterstützt zu scannen. Dabei wird eine Sondierungsbewegung ausgeführt, um Kontakt mit einer Objektoberfläche zu suchen. Während dem Ausführen der Sondierungsbewegung werden vom Roboter bereitgestellte Kraft- und/oder Drehmomentinformationen verwendet, um einen Kontakt zu erkennen. Nach Erkennen eines Kontakts werden Kontaktinformationen erfasst und/oder ermittelt. Unter Berücksichtigung von oder basierend auf erfassten und/oder ermittelten Kontaktinformationen wird ein Scanergebnis ermittelt.

Die Sondierungsbewegung kann wenigstens eine der folgenden Phasen umfassen: Initialisierung, Kontakterkennung, Post-Kontakt-Gleitbewegung, Kontinuierliche Datenerfassung und/oder Rasterförmige Wiederholung. Die Initialisierung kann als Phase 1 ausgeführt werden. Die Transversale Sondierung oder Kontaktsuche kann als Phase 2 ausgeführt werden. Die Kontakterkennung kann als Phase 3 ausgeführt werden. Die Post-Kontakt-Gleitbewegung kann als Phase 4 ausgeführt werden. Die kontinuierliche Datenerfassung kann als Phase 5 ausgeführt werden. Die rasterförmige Wiederholung kann als Phase 6 ausgeführt werden.

In der Phase der Initialisierung kann der Roboter zu einer vorbestimmten Startposition bewegt werden. Die Startposition kann basierend auf einer geschätzten oder bekannten Objektposition definiert sein.

In der Phase der transversalen Sondierung oder Kontaktsuche kann der Roboterendeffektor in transversaler Richtung, insbesondere senkrecht zu einer vermuteten Objektoberfläche, mit geringerer Geschwindigkeit bewegt werden, bis ein Kraft- oder Drehmomentsignal einen vorgegebenen Kontakt-Erkennungs-Schwellenwert überschreitet. Diese Phase kann charakterisiert sein durch eine positionsgeregelte Bewegung mit kontinuierlicher Kraft-Sensorüberwachung.

In der Phase der Kontakterkennung kann das Überschreiten eines Erkennungs-Schwellenwerts als Indikator für einen initialen Oberflächenkontakt interpretiert werden. Die Kontrolleinrichtung kann den Zeitpunkt und die Sensorsignalwerte beim Kontakt registrieren.

In der Phase der Post-Kontakt-Gleitbewegung kann nach Erkennung des initialen Kontakts die Sondierungsbewegung in eine kraftgeregelte oder impedanzgeregelte Gleitbewegung entlang der Objektoberfläche überführt werden. Die Gleitbewegung kann eine tangentiale Bewegung sein. Dabei kann eine Sollkraft, beispielsweise $F_{soll}$ =1-3 N, in der Oberflächennormalen-Richtung gehalten werden.

In der Phase der kontinuierlichen Datenerfassung können während jeder Sondierungs- und Gleitbewegung die Kraft- und Drehmomentsensorsignale erfasst werden. Die Kraft- und Drehmomentsensorsignale können mit einer Sampling-Frequenz, beispielsweise mit einer Sampling-Frequenz von 500 Hz, erfasst werden. Die Kraft- und Drehmomentsensorsignale können kontinuierlich erfasst werden. Die erfassten Kraft- und Drehmomentsensorsignale können in der Kontrolleinrichtung gepuffert werden.

Nachdem an einem Rasterpunkt Kontaktinformationen erfasst wurden kann in der Phase der rasterförmigen Wiederholung der Endeffektor zu einem neuen Rasterpunkt bewegt werden, beispielsweise gemäß Bewegungsstrategie nach Absatz [0045], und die Phasen 2-5 können wiederholt werden. Diese Wiederholung kann einem vorgegebenen Muster folgen, beispielsweise rechtwinklige Rastergitter mit Abstand d=5-10 mm.

Die Bezeichnung "dreidimensional" wird vorliegend insbesondere in Bezug auf den dreidimensionalen euklidischen Raum verwendet und bezeichnet insofern ein räumliches Objekt. Die Bezeichnung "Objekt" wird vorliegend insbesondere für geometrische Körper oder Körperabschnitte verwendet, also für dreidimensionale Figuren, die durch ihre Oberfläche beschreibbar sind. Die Figur kann eine Positivfigur, beispielsweise ein Werkstück, oder eine Negativfigur, beispielsweise eine Kavität, sein. Das Objekt ist insbesondere ein reales Objekt. Die Bezeichnung "roboterunterstützt" beschreibt vorliegend insbesondere, dass das Scannen des Objekts mit Unterstützung und/oder mithilfe eines Roboters erfolgt. Der Roboter kann dabei vollständig autonom, teilweise autonom und teilweise durch eine Bedienperson kontrolliert, vollständig durch eine Bedienperson kontrolliert, kollaborativ und/oder aus der Distanz betrieben werden. Die Bezeichnung "Scannen" bezieht sich vorliegend insbesondere auf ein Abtasten, das darauf abzielt, durch eine Vielzahl von Einzelmessungen eine erweiterte Informationsbasis zu erzeugen. Das Scannen erfolgt insbesondere kontaktbasiert. Die Bezeichnung "Sondierungsbewegung" beschreibt vorliegend insbesondere eine Bewegung, die vorsichtig und/oder zum Untersuchen, Erkunden, Beurteilen und/oder Abschätzen ausgeführt wird.

Die Bezeichnung "Kontakt" bezieht sich vorliegend insbesondere auf einen mechanischen, physischen, taktilen, haptischen und/oder Berührkontakt. Ein Kontakt ist insbesondere ein Kontakt zwischen einem Element des Roboters und dem Objekt. Das Element des Roboters ist insbesondere ein geometrischer Körper, also eine dreidimensionale Figur, die durch ihre Oberfläche beschreibbar ist. Die Oberfläche des Elements des Roboters kann auch als Roboterelementoberfläche bezeichnet werden. Der Roboter, das Element des Roboters und/oder die Roboterelementoberfläche können/kann bekannt sein und/oder als mathematisches Modell vorliegen. Das Objekt und/oder die Objektoberfläche können/kann bekannt sein und/oder als mathematisches Modell vorliegen. Ein Kontakt ist insbesondere ein Kontakt zwischen der Roboterelementoberfläche und der Objektoberfläche. Ein Kontakt kann in einer Kontaktregion gesucht und/oder erkannt werden. Ein Kontaktregion kann ein Abschnitt der Roboterelementoberfläche und/oder der Objektoberfläche sein. Die Roboterelementoberfläche und/oder die Objektoberfläche können/kann zumindest abschnittsweise, insbesondere in der Kontaktregion, eben, konvex gekrümmt und/oder konkav gekrümmt sein. Ein Kontakt kann ein Punktkontakt und/oder ein Flächenkontakt sein. Ein Kontaktpunkt und/oder eine Kontaktfläche können/kann in der Kontaktregion liegen. Zwischen der Roboterelementoberfläche und/oder der Objektoberfläche können Reibungskräfte wirksam sein oder werden. Ein Kontakt kann reibungsbehaftet sein. Ein Kontakt kann ein starrer, elastischer, viskoelastischer, plastischer, statischer und/oder dynamischer Kontakt sein.

Die Bezeichnung "vom Roboter bereitgestellte Informationen" wird vorliegend insbesondere für roboterpropriozeptive und/oder roboterintrinsische Informationen und/oder für Informationen, die auf Signalen von Sensoren des Roboters basieren und/oder von einer Kontrolleinrichtung des Roboters bereitgestellt werden, verwendet. Die vom Roboter bereitgestellten Kraft- und/oder Drehmomentinformationen können auf Signalen wenigstens eines Kraftsensors und/oder wenigstens eines Drehmomentsensors des Roboters basieren. Die vom Roboter bereitgestellten Kraft- und/oder Drehmomentinformationen können auf redundanten Signalen, insbesondere auf vollständig redundanten Signalen, wenigstens eines Kraftsensors und/oder wenigstens eines Drehmomentsensors des Roboters basieren. Die Bezeichnung "Drehmoment" wird vorliegend insbesondere im allgemeinen Sinne verwendet, gleichbedeutend mit dem Begriff "Moment" der technischen Mechanik, und ist nicht beschränkt auf Drehbewegungen oder Kräftepaare.

Der Begriff "vom Roboter bereitgestellte Kraft- und/oder Drehmomentinformationen" kann vorliegend insbesondere auf folgende auch als Typ A, Typ B und Typ C bezeichnete Arten, interpretiert werden, wobei Typ A auf eine Signal-Ebene bezogen sein und eine direkt-Messung beinhalten kann, Typ B auf eine Sensor-Fusion-Ebene bezogen sein und eine redundante Messung beinhalten kann und Typ C auf eine Algorithmus-Ebene bezogen sein und eine rekursive Schätzung beinhalten kann.

Typ A: Die Kraft- und Drehmomentinformationen können direkt von den integrierten Sensoren erfasst und mit minimaler Signalverarbeitung, beispielsweise einfacher Low-Pass-Filterung, an die Kontrolleinrichtung übermittelt werden. Das Ergebnis können "Rohmesswerte" $F_x$, $F_y$, $F_z$, $M_x$, $M_y$, $M_z$ sein, die unmittelbar den Sensorsignalen entsprechen können. Diese Methode kann vorteilhaft sein, wenn ein hochauflösender Sensor vorhanden ist und/oder eine Fachperson die weitere Verarbeitung durchführt.

Typ B: Wenn der Roboter in redundanter Konfiguration sowohl Kraft-Sensoren an der Basis als auch am Endeffektor aufweist, können beide Messsignale kombiniert werden. Dies kann erreicht werden durch Transformation beider Messwerte in ein gemeinsames Koordinatensystem, insbesondere durch Mittelung oder gewichtete Kombination, beispielsweise Kalman-Filter, oder durch Detektion von Sensor-Abweichungen oder - Fehlern. Das Ergebnis können "gefilterte" oder "kombinierte" Kraft- und Drehmomentinformationen mit höherer Genauigkeit und Robustheit sein. Diese Methode kann besonders in komplexen Industrieanwendungen vorteilhaft sein.

Typ C: Die Kontrolleinrichtung kann die erfassten Sensorsignale mit einem mathematischen Schätzalgorithmus verarbeiten, beispielsweise Bayes'scher Filter, Kalman-Filter, Extended Kalman Filter oder Particle Filter. Solche Algorithmen können die Unsicherheit und das Rauschen in den Messwerten modellieren und "geschätzte" oder "gefilterte" Kraft-/Drehmomentinformationen mit reduzierter Unsicherheit produzieren. Mathematische Basis für diese Schätzung kann die Schraubentheorie oder die Lagrangian-Mechanik sein.

Alle drei Typen A, B und C können "Kraft- und Drehmomentinformationen" im vorliegenden Sinne liefern. Die Wahl zwischen ihnen kann von einer Hardware-Konfiguration, insbesondere ein Sensor vs. redundante Sensoren, der gewünschten Genauigkeit und/oder den verfügbaren Rechenressourcen abhängen. Für eine konkrete Anwendung kann die geeignete Methode gewählt werden. Beispiel: Bei einem typischen kollaborativen Roboter mit einem 6-Achsen-Kraft-Sensor am Endeffektor könnten Typ A oder C verwendet werden. Bei einem Industrieroboter mit redundanter Sensorik (Basis + Endeffektor) könnte Typ B bevorzugt werden.

Ein Kontakt kann unter Verwendung eines Schwellenwerts, insbesondere bei Überschreiten eines vorbestimmten Schwellenwerts, erkannt werden. Der Schwellenwert kann ein Kraft- und/oder Drehmomentwert sein und/oder einem Kraft- und/oder Drehmomentwert zugeordnet sein. Der Schwellenwert kann eine Kraft- und/oder Drehmomentänderung sein und/oder einer Kraft- und/oder Drehmomentänderung zugeordnet sein.

Das "Erkennen eines Kontakts" kann insbesondere nach einer der folgenden konkretisierten Methoden A, B oder C erfolgen, wobei Methode A eine Basis- oder Schwellenwert-Methode, Methode B eine Derivative/Rate-of-Change-Methode und/oder Methode C eine Bayesian Filter Methode sein kann.

Methode A: Der Roboter kann kontinuierlich die Magnitude der Kraft- und/oder Drehmomentsignale $F(t)$ und $M(t)$ aus den Sensoren überwachen. Ein Kontakt kann erkannt werden, wenn eine oder mehrere dieser Komponenten einen vorgegebenen Schwellenwert $F_{th}$ oder $M_{th}$ überschreiten:
Kontakt erkannt, wenn:

$$\|F(t)\| > F_{th} \text{ ODER } \|M(t)\| > M_{th}$$

wobei:

- $F_{th}$ typischerweise im Bereich 0,5-5,0 N liegen kann, abhängig von Endeffektor-Masse, Sensorgenauigkeit, Oberflächenreibung
- $M_{th}$ typischerweise im Bereich 0,05-0,5 Nm liegen kann
- $F_{th}$ und $M_{th}$ durch den Nutzer vor dem Scan definiert oder automatisch durch Kalibrierung bestimmt werden kann

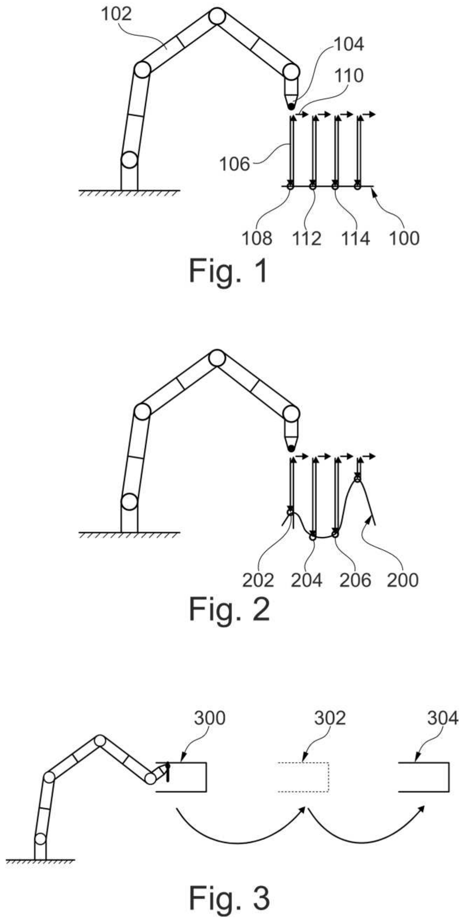

Diese Methode kann einfach zu implementieren und robust gegen Sensorausfallrauschen sein, solange der Schwellenwert richtig gewählt ist. Sie ist in Fig. 1-5 impliziert (vertikale Sondierungsbewegung bis zum Kontakt).

Methode B: Ein Kontakt kann erkannt werden durch einen abrupten Anstieg (Sprung) in den Kraft-/Drehmomentsignalen, d.h. wenn die zeitliche Änderungsrate eines Signals einen Schwellenwert überschreitet:
Kontakt erkannt, wenn:

$$\frac{dF}{dt} > dF_{th} \text{ ODER } \frac{dM}{dt} > dM_{th}$$

Dies ist äquivalent zu:

$$(F(t) - F(t - \Delta t))/\Delta t > dF_{th}$$

wobei:

- $dF_{th}$ typischerweise im Bereich 1-50 N/s liegen kann
- $dM_{th}$ typischerweise im Bereich 0,05-0,5 Nm/s liegen kann
- $\Delta t$ das Sampling-Intervall sein kann (z.B. 2 ms bei 500 Hz Sampling-Rate)

Diese Methode kann vorteilhaft sein, wenn ein Hintergrund-Rauschen oder Gravitations-induzierte Basiskräfte hoch sind. Diese Methode kann schnelle Übergänge erkennen und weniger empfindlich gegenüber konstanten Offset-Fehlern sein.

Methode C: Ein rekursiver Bayes'scher Zustandsschätzer oder -filter kann die Sensorhistorie verarbeiten und die Wahrscheinlichkeit $P_{contact}(t)$, dass ein Kontakt besteht, berechnen:
Kontakt erkannt, wenn:

$$P_{\text{contact}}(t) > P_{\text{threshold}} \ (z.\,B.\,P_{\text{threshold}} = 0{,}8 - 0{,}95)$$

Der Filter kann zwei Zustände modellieren:

- Zustand 0: Kein Kontakt → Erwartete Kraft/Moment ≈ 0
- Zustand 1: Kontakt → Erwartete Kraft/Moment > Schwellenwert

Beispiele typischer Implementierungen:

- Kalman-Filter: Für lineare Modelle oder näherungsweise linear
- Extended Kalman Filter (EKF): Für nicht-lineare Sensormodelle
- Particle Filter: Für stark nicht-lineare oder multimodale Verteilungen

Diese Methode kann am robustesten gegen Rauschen und Unsicherheit sein, aber mehr Rechenleistung und Modell-Tuning erfordern.

Alle drei Methoden können vorliegend gleichberechtigt sein. Die Wahl kann abhängen von:

- Verfügbarer Rechenleistung (A < B < C)
- Sensorqualität (rauscharm → A ausreichend; rauschig → C empfohlen)
- Echtzeit-Anforderungen (A und B schneller als C)
- Oberflächen-Eigenschaften (sanft vs. rau)

Beispiel: In Fig. 1 und Fig. 4 kann eine einfache Schwellenwert-Methode (A) verwendet werden. In Fig. 6 mit kontinuierlicher Gleitbewegung kann eine robustere Methode (B oder C) verwendet werden, um falsch-positive Kontakt-Erkennungen zu vermeiden.

Die Bezeichnung "Kontaktinformationen" wird vorliegend insbesondere für Informationen verwendet, die erkannte Kontakte betreffen. Da die Kontaktinformationen vorliegend insbesondere auf einem mechanischen, physischen, taktilen, haptischen und/oder Berührkontakt basieren, können die Kontaktinformationen auch als mechanische, physische, taktile, haptische und/oder Berührinformationen bezeichnet werden. Die Kontaktinformation können unter Berücksichtigung der oder basierend auf den vom Roboter bereitgestellten Kraft- und/oder Drehmomentinformationen erfasst und/oder ermittelt werden. Die Kontaktinformationen können unter Berücksichtigung von oder basierend auf Weg- und/oder Winkelinformationen erfasst und/oder ermittelt werden. Die Weg- und/oder Winkelinformationen können vom Roboter bereitgestellte Weg- und/oder Winkelinformationen sein. Die Bezeichnung "erfassen" wird vorliegend insbesondere in Bezug auf ein qualitatives und/oder quantitatives Aufnehmen und/oder Detektieren spezifischer physikalischer Eigenschaften verwendet. Die Bezeichnung "ermitteln" wird vorliegend insbesondere in Bezug auf ein Verarbeiten von Signalen und/oder ein Berechnen verwendet.

Das Merkmal "Kontaktinformationen erfasst und/oder ermittelt" kann sich auf zwei komplementäre Operationen in der Datenverarbeitung beziehen, nämlich auf das Erfassen, auch als Sensing/Data Acquisition bezeichnet, und das Ermitteln, auch als Computation/Signal Processing bezeichnet.

Das Erfassen von Kontaktinformationen kann sich auf das unmittelbare Aufnehmen physikalischer Rohdaten durch die Sensoren des Roboters beziehen. Dies kann umfassen:

(i) Direkte Registrierung der Kraft-Komponenten $F_x, F_y, F_z$ aus dem F/M-Sensor.

(ii) Direkte Registrierung der Drehmomention-Komponenten $M_x, M_y, M_z$ aus dem F/M-Sensor.

(iii) Erfassung der aktuellen Gelenkstellungen $\theta_1, ..., \theta_N$ über Gelenk-Encoder, um später die Endeffktor-Position zu berechnen.

(iv) Erfassung von Zeitstempeln und Sampling-Raten, um eine zeitliche Korrelation zwischen verschiedenen Sensor-Messwerten zu gewährleisten.

(v) Optional: Erfassung von zusätzlichen Sensor-Daten (z.B. Beschleunigungen vom IMU, optisches Feedback, etc.).

Das Ergebnis der Erfassung kann ein Satz von "Rohkontaktdaten" mit minimaler Filterung sein.

Das Ermitteln von Kontaktinformationen kann sich auf die rechnerische Verarbeitung und Transformation der erfassten Sensorsignale durch die Kontrolleinrichtung beziehen. Dies kann umfassen:

(i) Koordinaten-Transformation: Umwandlung der Kraft-/Drehmomentsignale vom Sensor-Koordinatensystem in das Welt-Koordinatensystem mittels Roboter-Kinematik.

(ii) Berechnung der 3D-Kontaktposition $[x_c, y_c, z_c]$ aus:

- Der Endeffektor-Position (Forward-Kinematik aus Gelenkstellungen)
- Der Sensorposition relativ zum Endeffektor
- Der Kraft-Gradient oder dem Oberflächenmodell

(iii) Berechnung der Oberflächennormalen $[n_x, n_y, n_z]$ unter Verwendung mathematischer Modelle:

- Schraubentheorie (Wrench-Calculus): $(F, M)$ = Kraft-Schraube (Dyname), deren Achse die Oberflächennormale definiert
- Inverse-Kinematik-basierte Methoden: Rekonstruktion des Normalen-Gradienten
- Lokale Oberflächenmodelle: Anpassung von Ebenen oder Sphären an die Kraft-Trajektorie

(iv) Rauschreduktion und Filterung der Schätzwerte durch statistische Methoden:

- Low-Pass-Filterung
- Kalman-Filterung (vgl. Abs. [0018], Bayes-Filter)
- Robuste Schätzung (z.B. M-Schätzer)

(v) Berechnung von Sekundär-Informationen:

- Kontaktkraft-Magnitude:

$$\|F\| = \sqrt{F_x^2 + F_y^2 + F_z^2}$$

- Reibungsfaktor oder -koeffizient (wenn Materialparameter bekannt)
- Oberflächenkrümmung oder -textur

Das Ergebnis der Ermittlung sind "verarbeitete Kontaktinformationen" mit hoher Genauigkeit und Robustheit.

Die Erfassung und die Ermittlung können beide notwendig sein und sequenziell ausgeführt werden, um vollständige Kontaktinformationen zu generieren:
Erfassung (Sensoren) → Rohdaten → Ermittlung (Software) → Kontaktinformationen Das Merkmal "erfasst und/oder ermittelt" kann vorliegend insbesondere bedeuten:

- "erfasst": Speichern der Sensorsignale
- "ermittelt": Berechnen von Positions- und Normalenwerten

Dabei kann sowohl ein Erfassen als auch ein Ermitteln obligatorisch sein. Beide Operationen können sequenziell kombiniert sein.

Unterschiedliche Roboter und Kontrolleinrichtungen können die Erfassung und Ermittlung unterschiedlich aber äquivalent implementieren:

- Roboter mit On-Board-Rechner (z.B. UR-Roboter): Erfassung und Ermittlung könne beide auf dem Roboter ausgeführt werden
- Roboter mit externer Kontrolle (z.B. Industrieroboter): Erfassung kann auf dem Roboter erfolgen, Ermittlung kann auf einem externen PC erfolgen
- Hybrid-Systeme: Eine Verarbeitung kann teilweise auf dem Roboter und teilweise auf einem PC erfolgen. Echtzeit-kritische Verarbeitungsteile können auf dem Roboter erfolgen. Verarbeitungsteile auf dem PC können in nicht-Echtzeit erfolgen.

Alle diese Implementierungen können vorliegend als äquivalent angesehen werden.

Die Bezeichnung "Scanergebnis" wird vorliegend insbesondere für ein Ergebnis verwendet, das auf Kontaktinformationen basiert und/oder Kontaktinformationen umfasst. Insbesondere basiert das Scanergebnis kann auf Kontaktinformationen mehrerer Kontakte, wobei die Kontaktinformationen zueinander in Bezug gesetzt werden. Das Scanergebnis kann Oberflächeninformationen umfassen und/oder aus Oberflächeninformationen bestehen. Die Oberflächeninformationen können Informationen über Geometrie, Maß, Form, Lage, Position, Orientierung und/oder Beschaffenheit der Objektoberfläche umfassen und/oder aus Informationen über Geometrie, Form, Lage, Position, Orientierung und/oder Beschaffenheit der Objektoberfläche bestehen. Das Scanergebnis kann dazu ausgelegt sein, analysiert, weiterverarbeitet und/oder dargestellt, insbesondere visualisiert, zu werden. Das Scanergebnis kann Punkte umfassen und/oder eine Punktwolke sein. Das Scanergebnis kann als Zwischenergebnis und/oder als Endergebnis ausgelegt sein.

Das "Scanergebnis" kann hierarchisch strukturiert und/oder auf mehreren Abstraktionsebenen definiert werden. Insbesondere kann das Scanergebnis auf vier Abstraktionsebenen EBENE 1, EBENE 2, EBENE 3 und EBENE 4 definiert werden, wobei sich EBENE 1 auf ein Rohformat und/oder eine Kontaktpunkt-Sammlung, EBENE 2 auf ein verarbeitetes Format und/oder eine gefilterte Punktwolke, EBENE 3 auf ein abstraktes Format und/oder geometrisches Modell und/oder EBENE 4 auf eine höchste Abstraktion, ein CAD-Modell und/oder eine Objektidentifizierung beziehen kann.

EBENE 1: Das Scanergebnis kann in seiner rohesten Form aus einer endlichen Menge $\{P_1, P_2, ..., P_n\}$ von Kontaktpunkten bestehen, wobei $n$ die Anzahl der erfassten Abtastpunkte ist, typischerweise 100-10.000 Punkte je nach Oberflächenauflösung.

Jeder Punkt $P_i$ kann ein Vektor sein, der folgende Komponenten enthalten kann:

$$P_i = \{x_i, y_i, z_i, F_{x,i}, F_{y,i}, F_{z,i}, n_{x,i}, n_{y,i}, n_{z,i}, t_i\}$$

mit:

- Kontaktposition im Weltkoordinatensystem: $(x_i, y_i, z_i) \in \mathbb{R}^3$

- Kontaktkraft-Vektor: $(F_{x,i}, F_{y,i}, F_{z,i}) \in \mathbb{R}^3$ , $\|F_i\| > F_{\text{th}}$ (Schwellenwert)
- Oberflächennormale (Einheitsvektor): $(n_{x,i}, n_{y,i}, n_{z,i}) \in S^2$ (Einheitssphäre)

- Erfassungszeit: $t_i \in \mathbb{R}$ (oder Sampel-Index)

Diese Menge kann als "Rohpunktwolke" (raw point cloud) oder "Kontakt-Punktwolke" bezeichnet werden. Sie kann äquivalent sein zu den in Fig. 1-5 dargestellten Kontaktpunkten (108, 112, 114, 202, etc.).

EBENE 2: Das Rohformat kann durch weitere Signalverarbeitung transformiert werden zu einem "verarbeiteten Scanergebnis":

$$\hat{P}_i = \{\hat{x}_i, \hat{y}_i, \hat{z}_i, \hat{F}_{x,i}, \hat{F}_{y,i}, \hat{F}_{z,i}, \hat{n}_{x,i}, \hat{n}_{y,i}, \hat{n}_{z,i}, t_i\}$$

Dies kann dasselbe Format sein wie Ebene 1, aber mit:

- Filterung: Entfernung von Ausreißern oder Rauschen
- Interpolation: Erhöhung der Dichte durch Zwischenpunkte
- Glättung: Anwendung von lokalen Mitteln oder Kernel-Methoden
- Normalisierung: Vereinheitlichung von Zahlenwert-Bereichen

Das Ergebnis kann eine saubere, hochgenaue Punktwolke mit verbesserter Genauigkeit sein.

EBENE 3: Das verarbeitete Format kann weiter zu geometrischen Primitiven oder Oberflächen-Modellen abstrahiert werden:

3a) Geometrische Primitive:

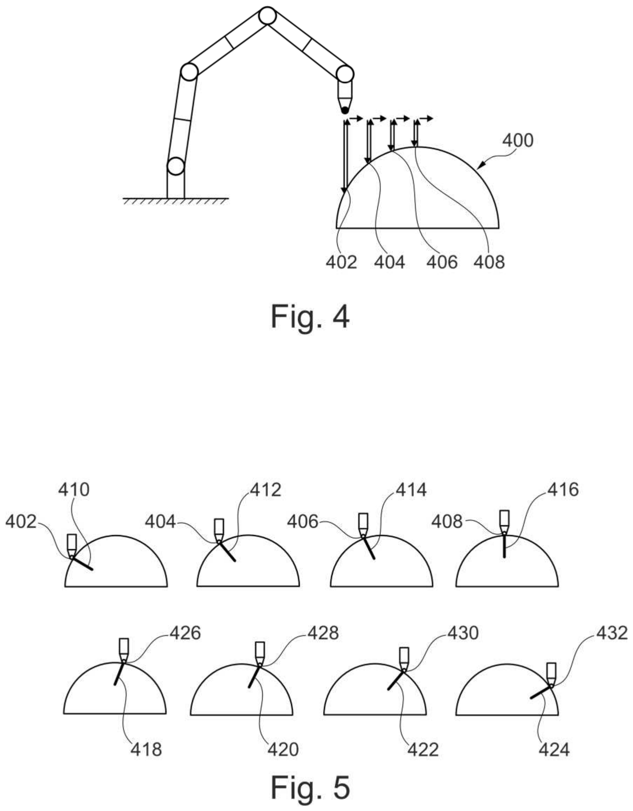

- Ebenen: Wenn die Kontaktpunkte koplanar sind (z.B. Fig. 1), können sie durch eine einzelne Ebene $P = \{n, d\}$ mit Normalenvektor $n$ und Abstand $d$ zum Ursprung dargestellt werden
- Sphären: Wenn die Punkte auf einer gekrümmten Fläche liegen (z.B. Fig. 4), können sie durch einen Kugel-Mittelpunkt $C$ und Radius $R$ beschrieben werden
- Zylinder, Kegel, etc.: Andere Standardformen

Diese Primitive können das Ergebnis von Fitting-Methoden (z.B. Least-Squares-Fitting) sein.

3b) Oberflächenmodelle:

- Triangulations-Mesh (STL-Format): Unterteilung der Oberfläche in kleine Dreiecke
- NURBS-Oberfläche: Parametrisches Oberflächenmodell mit Kontrollpunkten
- Implicit Function: Oberflächendefinition durch $f(x, y, z) = 0$
- Radial Basis Function (RBF) Interpolation: Glatte Oberflächeninterpolation

Diese Modelle können das Ergebnis von Oberflächenrekonstruktions-Algorithmen sein.

3c) Topologische Strukturen:

- Netzwerk mit Kanten: Kontaktpunkte als Knoten, Verbindungen basierend auf räumlicher Nähe oder Oberflächen-Krümmung
- Segmentiertes Modell: Unterteilung in zusammenhängende Regionen (Ebene, Kante, etc.)

EBENE 4: Das geometrische Modell kann schließlich mit bekannten CAD-Modellen oder früheren Scans abgeglichen werden (Matching-Verfahren, vgl. Abs.[0049], [0074]):

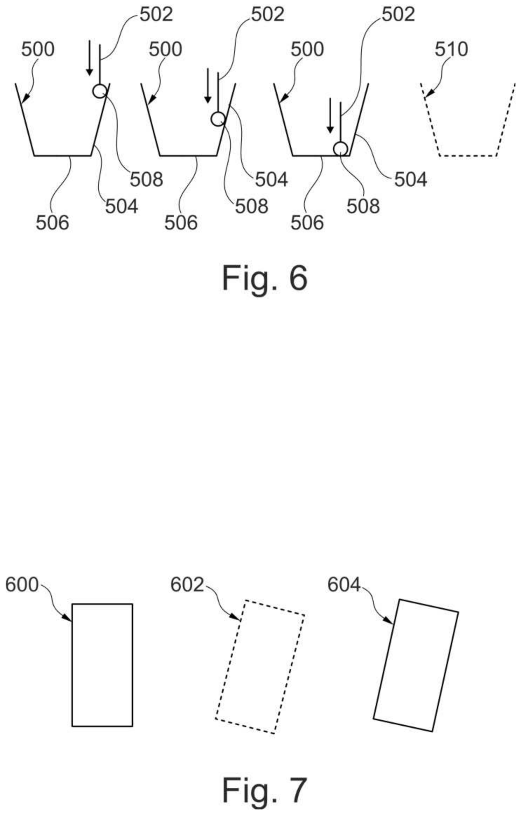

- Objekt-Identifikation: "Dies ist ein Zylinder mit Radius 10 mm und Höhe 50 mm"
- Objektpositionierung: "Das Objekt ist bei $(x, y, z) = (100,200,50)$ mm im Arbeitsbereich positioniert" (vgl. Fig. 7)

Zeitliche Dimension (Zwischen- vs. Endergebnis): Das Scanergebnis kann zu verschiedenen Zeitpunkten verfügbar sein:

- Zwischenergebnis: Verfügbar nach Abschluss einer Teilmenge der geplanten Abtastpunkte (z.B. nach 50% der Rasterpunkte). Dies ermöglicht Progressive Visualisierung oder adaptive Scan-Anpassung (vgl. Abs. [0073])
- Endergebnis: Verfügbar nach Erfassung aller geplanten Abtastpunkte und nach optionalen Verarbeitungsschritten (Filterung, Rekonstruktion). Dies ist die endgültige, hochgenaue Darstellung der gescannten Oberfläche.

Äquivalenz und Kontinuum: Diese vier Ebenen können ein kontinuierliches Spektrum von "Scanergebnis" bilden:
Rohpunktwolke ← Verarbeitet ← Geometrische Primitive ← CAD-Modell
Alle Zwischenformen können vorliegend äquivalent zu "einem Scanergebnis" sein. Basierend auf den Anforderungen der Anwendung kann jeweils die passende Abstraktionsebene gewählt werden:

- Vision/Analyse: Ebene 1-2 (Rohpunktwolke, schnell)
- Oberflächenrekonstruktion: Ebene 3a-3b (Mesh oder Modell)
- Objektidentifizierung: Ebene 4 (CAD-Match)

Beispiele aus den Figuren:

- Fig. 1-5: Ebene 1 (Rohpunktwolke aus Kontaktpunkten)

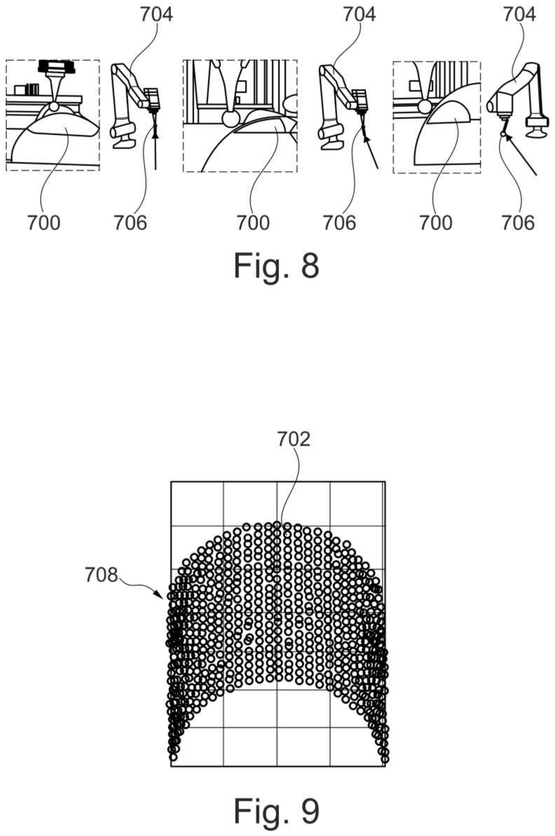

- Fig. 3, 9: Ebene 3 (Oberflächenmodell/Mesh)
- Fig. 6: Ebene 1-2 (kontinuierliche Gleitbewegung → dichte Rohpunktwolke)
- Fig. 7: Ebene 4 (Matching gegen bekanntes CAD-Modell)

Die Kontaktinformationen können eine Kontaktposition, eine Kontaktkraft und/oder ein Kontaktmoment umfassen. Die Kontaktposition kann ein Kontaktpunkt sein. Die Kontaktposition kann dreidimensional, räumlich und/oder im euklidischen Raum darstellbar oder dargestellt sein. Die Kontaktposition kann als Positionstrajektorie darstellbar oder dargestellt sein. Die Kontaktposition kann in wenigstens einem Koordinatensystem darstellbar oder dargestellt sein. Das Koordinatensystem kann einem Endeffektor des Roboters, einem Anschlussflansch des Roboters, einem Endeffektor des Roboters, einem Kontaktpunkt und/oder einem Tool Center Point (TCP) zugeordnet sein. Unter Berücksichtigung von oder basierend auf erfassten und/oder ermittelten Kontaktinformationen kann eine Oberflächennormale ermittelt werden. Die Oberflächennormale kann eine Normale der Roboterelementoberfläche und/oder Normale der Objektoberfläche sein. Die Oberflächennormale kann ein Kraftvektor sein. Die Oberflächennormale kann für den Kontaktpunkt ermittelt werden. Insofern kann die Oberflächennormale auch als Kontaktnormale bezeichnet werden. Die Oberflächennormale kann eine Kontaktinformation sein und/oder zu den Kontaktinformationen gehören.
Die Kontaktposition, die Kontaktkraft, die Oberflächennormale und/oder das Kontaktmoment können/kann mithilfe eines mathematischen Modells ermittelt werden. Die Kontaktposition, die Kontaktkraft, die Oberflächennormale und/oder das Kontaktmoment können/kann unter Berücksichtigung oder basierend auf der Schraubentheorie ermittelt werden. Die Kontaktposition, die Kontaktkraft, die Oberflächennormale und/oder das Kontaktmoment können/kann unter Berücksichtigung oder basierend auf der Schraubentheorie ermittelt werden. Die Kontaktkraft kann eine Resultierende sein. Das Kontaktmoment kann ein Drehmoment um die Oberflächennormale sein. Nach Wahl eines Bezugspunktes können die Resultierende und das Drehmoment als statisch äquivalentes Paar ein Kräftesystem beschreiben. Der Kontaktpunkt kann als Bezugspunkt gewählt werden. Das Paar aus Resultierender und Drehmoment kann als Schraube zweiter Art, Dyname, Kraftschraube, Kraftwinder oder Wrench bezeichnet werden.

Die Sondierungsbewegung kann zumindest abschnittsweise fortlaufend, nacheinander, aufeinander folgend, in diskreten Schritten und/oder sequentiell wiederholt ausgeführt werden. Die Sondierungsbewegung kann zumindest abschnittsweise kontinuierlich und/oder gleitend ausgeführt werden. Die Sondierungsbewegung kann zumindest abschnittsweise kraftgeregelt ausgeführt werden. Dabei kann eine Kopplung zwischen Kraft und Position berücksichtigt werden. Die Sondierungsbewegung kann zumindest abschnittsweise direkt kraftgeregelt, indirekt kraftgeregelt, aktiv impedanzgeregelt oder passiv impedanzgeregelt ausgeführt werden. Beim Ausführen der Sondierungsbewegung kann beispielsweise die in der Veröffentlichung M. Iskandar, C. Ott, A. Albu-Schäffer, B. Siciliano and A. Dietrich, "Hybrid Force-Impedance Control for Fast End-Effector Motions," in IEEE Robotics and Automation Letters, vol. 8, no. 7, pp. 3931-3938, July 2023, doi: 10.1109/LRA.2023.3270036, beschriebene hybride Kraft-Bewegungs-Strategie abgewendet werden. Die Sondierungsbewegung kann orientiert an einer bekannten, vermuteten und/oder geschätzten Lage, Position, Orientierung der Objektoberfläche ausgeführt werden. Die Sondierungsbewegung kann bis zum Erkennen eines Kontakts transversal zur Objektoberfläche ausgeführt werden. Die Bezeichnung "transversal" wird vorliegend insbesondere mit der Bedeutung "quer verlaufend", "schräg", "winklig" oder "senkrecht" verwendet. Auch wenn mit der Bezeichnung "transversal" grundsätzlich keine Beschränkung auf einen spezifischen Winkel verbunden ist, kann damit bei einer ebenen Objektoberfläche eine Sondierungsbewegung senkrecht zur Objektoberfläche beschrieben werden. Die Sondierungsbewegung kann nach Erkennen eines Kontakts tangential zur Objektoberfläche, entlang der Objektoberfläche und/oder in Kontakt mit der Objektoberfläche ausgeführt werden.

Die Sondierungsbewegung kann einer Bewegungsstrategie folgend ausgeführt werden. Die Sondierungsbewegung kann auf eine systematische, regelmäßige Weise ausgeführt werden. Die Sondierungsbewegung kann ausgehend von einem Startpunkt ausgeführt werden. Die Sondierungsbewegung kann zumindest abschnittsweise einem vorgegebenen Muster folgend ausgeführt werden, insbesondere gitterförmig oder rasterförmig. Die Bewegungsstrategie kann im Hinblick auf ein zu scannendes Objekt ausgewählt werden. Die Bewegungsstrategie kann unter Berücksichtigung von oder basierend auf dem Scanergebnis angepasst werden.

Beim Erkennen des Kontakts und/oder beim Ermitteln der Kontaktinformationen und/oder des Scanergebnisses können Eigenschaften des Roboters, eines Roboterelements, einer Roboterelementoberfläche, des Objekts, der Objektoberfläche, und/oder des Kontakts berücksichtigt werden. Die Eigenschaften können Reibungskräfte, eine Kontaktmechanik und/oder eine Kontaktdynamik betreffen, insbesondere ein Material des Roboterelements, eine Beschaffenheit der Roboterelementoberfläche, eine Verformbarkeit des Roboterelements, ein Material des Objekts, eine Beschaffenheit der Objektoberfläche, eine Verformbarkeit des Objekts eine Kontaktrichtung, Kontaktgeschwindigkeit und/oder eine Kontaktbeschleunigung. Ein Kontaktpunkt, eine Oberflächennormale und eine Verformung des Roboterelements können ermittelt werden.

Beim Erkennen des Kontaktes und/oder beim Ermitteln der Kontaktinformationen und/oder des Scanergebnisses kann eine Schätzfunktion der mathematischen Statistik verwendet werden. Beim Erkennen des Kontaktes und/oder beim Ermitteln von Kontaktinformationen und/oder des Scanergebnisses können Informationen über eine Unsicherheit ermittelt werden. Als Schätzfunktion kann ein Bayes-Schätzer, rekursiver Bayes'scher Zustandsschätzer oder Bayes'scher Filter verwendet werden.

Unter Berücksichtigung von oder basierend auf Scanergebnissen kann ein Modell des Objekts erstellt werden, insbesondere falls das Objekts und/oder die Objektoberfläche noch unbekannt sind/ist und/oder als mathematisches Modell noch nicht vorliegen/vorliegt. Unter Berücksichtigung von oder basierend auf Scanergebnissen kann ein Modell des Objekts angepasst und/oder verbessert werden, insbesondere falls das Objekts und/oder die Objektoberfläche bekannt sind/ist und/oder als mathematisches Modell vorliegen/vorliegt.

Unter Berücksichtigung von oder basierend auf Scanergebnissen kann das Objekt identifiziert werden, insbesondere durch Auswählen eines Objekts aus mehreren bekannten und/oder als mathematisches Modell vorliegenden Objekten. Beispielsweise kann das Objekt in einem Matching-Verfahren identifiziert werden.

Unter Berücksichtigung von oder basierend auf Scanergebnissen kann eine Objektposition ermittelt werden. Die Objektposition kann einen Ort und/oder eine Lage des Objekts umfassen. Das Ermitteln der Objektposition wird vorliegend insbesondere auch als "Lokalisieren" bezeichnet.

Der erfindungsgemäße Roboter weist wenigstens einen Kraftsensor und/oder wenigstens einen Drehmomentsensor und eine Kontrolleinrichtung auf. Der Roboter ist zum Ausführen des erfindungsgemäßen Verfahrens ausgelegt und/oder angeordnet. Der Roboter kann ein mobiler Roboter, ein kollaborativer Roboter, ein Teleroboter, ein Industrieroboter, ein Erkundungsroboter, ein Medizinroboter und/oder ein humanoider Roboter sein. Der Roboter kann eine Basis aufweisen. Der Basis kann ein Basiskoordinatensystem zugeordnet sein. Der Roboter kann einen bewegbaren Roboterarm und/oder Manipulator aufweisen. Der Roboter, insbesondere der Roboterarm und/oder Manipulator, kann Glieder aufweisen. Die Glieder können mithilfe von verstellbaren Gelenken miteinander verbunden sein. Die Glieder können eine Gliederkette und/oder kinematische Kette bilden. Die Gliederkette und/oder kinematische Kette kann ein frei bewegbares Ende aufweisen. Der Roboter kann einen Anschlussflansch aufweisen. Der Roboter kann einen Endeffektor aufweisen. Der Anschlussflansch oder der Endeffektor kann ein weiteres Glied der Gliederkette und/oder kinematische Kette bilden. Der Anschlussflansch oder der Endeffektor kann an dem Ende der Gliederkette und/oder kinematischen Kette angeordnet sein und/oder das Ende der Gliederkette und/oder kinematischen Kette bilden. Dem Roboter kann wenigstens ein Koordinatensystem zugeordnet sein. Das wenigstens eine Koordinatensystem kann der Basis, dem Anschlussflansch, einem Endeffektor und/oder einem Tool Center Point (TCP) zugeordnet sein. Der Endeffektor kann ein Element des Roboters bilden. Der Endeffektor kann eine Oberfläche aufweisen. Die Endeffektors kann auch als Endeffektoroberfläche oder Roboterelementoberfläche bezeichnet werden.

Der erfindungsgemäße Roboter kann wenigstens eines der folgenden spezifischen Hardware-Architektur-Merkmale aufweisen. Die spezifischen Hardware-Architektur-Merkmale können insbesondere eine mechanische Struktur, eine Kraft-Drehmomentsensorik, Gelenkpositions-Sensoren oder Encoder, ein Antriebssystem, und/oder einen Endeffektor oder Werkzeug des Roboters betreffen.

Spezifische Hardware-Architektur-Merkmale betreffend die mechanische Struktur: Roboter-Manipulator mit wenigstens 6 Freiheitsgraden (DOF), um beliebige 3D-Positionen und -Orientierungen des Endeffektors im Arbeitsbereich zu erreichen; Gelenkfolge, z.B. Schulter-Ellenbogen-Handgelenk oder äquivalent; Kinematische Kette mit bekannter, kalibrierbarer Forward-Kinematik.

Spezifische Hardware-Architektur-Merkmale betreffend die Kraft-Drehmomentsensorik Der Roboter kann wenigstens einen 6-Achsen-Kraft-Drehmomentsensor (F/T-Sensor) aufweisen. Der Drehmomentsensor kann angebracht sein an:

Option A: Endeffektor-Ebene (Tool Flange oder Mounting Plate)

-	Sensor sitzt zwischen Anschlussflansch und Endeffektor-Tool
-	Misst direkt die Interaktionskräfte am Werkzeug
-	Vorteil: Direkte Kontakt-Messung ohne kinematische Kompensation
-	Beispiel: UR10e mit FT 300S Sensor, ABB mit IRB1200 + FT-Sensor

Option B: Roboter-Basis-Ebene

-	Sensor sitzt zwischen Basis und erster Gelenkachse
-	Misst die resultierenden Kräfte/Momente am gesamten Manipulator
-	Nachteil: Muss inverse Kinematik + Dynamik-Modell verwenden, um Kontaktkräfte zu extrahieren (weniger direkt)
-	Vorteil: Robuster gegen Sensorausfälle am Endeffektor
-	Beispiel: ABB IRB6700 mit Flange Force Feedback

Option C: Redundante Konfiguration (beide Ebenen)

-	Gibt die höchste Robustheit und Genauigkeit
-	Ermöglicht Sensor-Fusion und Fehler-Detektion
-	Vgl. Abs. [0016] "vollständig redundante Signale"

Spezifische Hardware-Architektur-Merkmale betreffend die Gelenkpositions-Sensoren (Encoder): Wenigstens 6 Gelenk-Encoder zur Erfassung der Gelenkwinkel $\theta_i$; Auflösung: mindestens 0,01° oder besser; Notwendig zur Berechnung der Forward-Kinematik und somit der 3D-Kontaktposition (vgl. Abs. [0029] ff.).

Spezifische Hardware-Architektur-Merkmale betreffend das Antriebssystem: Elektrische oder hydraulische Antriebe mit Proportional-Spool-Ventilen oder PWM-Reglern; Muss in der Lage sein, kraftgeregelte (impedanzgeregelte) Bewegungen auszuführen (vgl. Abs. [0044]); Notwendig: Kaskadenregelung oder äquivalente Struktur zur Implementierung von Kraft-Feedback-Schleifen.

Spezifische Hardware-Architektur-Merkmale betreffend den Endeffektor (Werkzeug): Ein geometrisch definiertes Tastwerkzeug mit bekannter Geometrie; Beispiele: Tastwerkzeug, Tastspitze, Kugel-Kugelsegment, etc.; Die Geometrie muss kalibriert und im Roboter-Steuerungssystem hinterlegt sein; Beispiel: Kugel-Endeffektor mit Radius r = 5 mm (vgl. Fig. 6).

Der erfindungsgemäße Roboter kann wenigstens eines der folgenden spezifischen Software-Architektur-Merkmale aufweisen. Die spezifischen Software -Architektur-Merkmale können insbesondere eine Kontrolleinrichtung oder Komponenten, Echtzeit-Anforderungen und/oder eine Kalibrierung und Verwaltung des Roboters betreffen.

Spezifische Software-Architektur-Merkmale betreffend die Kontrolleinrichtung oder Komponenten: Die Kontrolleinrichtung kann Hardware und/oder Software-Module aufweisen. Die Hardware kann aufweisen: einen Echtzeit-Prozessor (CPU), beispielsweise mit Taktraten 1-10 GHz; einen Arbeitsspeicher (RAM), beispielsweise wenigstens 2-8 GB; einen Datenspeicher, wie SSD/HDD, beispielsweise wenigstens 100 GB für Scan-Daten; Echtzeit-fähige Schnittstellen, wie Ethernet, CAN-Bus, USB, PCI-Express; optionale Grafikverarbeitung (GPU). Die Software-Module können die Schritte des Scanverfahrens implementieren und ein Modul zur Sensorsignal-Erfassung und Synchronisierung, ein Modul zur Kontakterkennung, ein Roboter-Kinematik-Engine-Modul, ein Modul zur Kontakt-Lokalisierung & Oberflächennormalen-Berechnung, ein Modul zur Kraftregelung & Impedanzregelung, ein Modul zur Scanmuster-Verwaltung, ein Modul zur Datenverarbeitung & Punkt-Wolke-Aggregation und/oder ein Modul zur Fehlerbehandlung & Logging aufweisen.

Das Modul zur Sensorsignal-Erfassung & Synchronisierung kann aufweisen: Treiber für F/T-Sensor mit Zugriff auf Rohdaten; Treiber für Gelenkencoder; Thread-Management zur gleichzeitigen Erfassung mehrerer Datenströme; Zeitstempel-Synchronisierung (z.B. mittels GPS oder NTP für verteilte Systeme); Sampling-Rate: konfigurierbar, beispielsweise 500 Hz oder höher. Das Modul zur Kontakterkennung kann aufweisen: Implementierung der Schwellenwert-Methode (Methode A) als Minimum, Optionale Implementierung der Rate-of-Change-Methode (B); Optionale Implementierung der Bayesian-Filter-Methode (C); Schwellenwert-Parameter ($F_{th}$, $M_{th}$) sind justierbar. Das Roboter-Kinematik-Engine-Modul kann aufweisen: Forward-Kinematik: $\theta_i \rightarrow (x,y,z,\text{Orientierung})$; Inverse-Kinematik: $(x,y,z) \rightarrow \theta_i$ (für Bewegungsplanung); Jacobian-Berechnung für Kraft-Umrechnung; Singularitäts-Handhabung.

Das Modul zur Kontakt-Lokalisierung & Oberflächennormalen-Berechnung kann aufweisen: Berechnung der 3D-Kontaktposition aus Endeffektor-Position (Forward-Kin.), Sensorsignal-Werten und/oder Endeffektor-Geometrie; Berechnung der Oberflächennormalen nach Methode 1: Direkter Kraftvektor ($F/\|F\|$), Methode 2: Schraubentheorie und/oder Methode 3: Lokale Oberflächen-Approximation. Das Modul zur Kraftregelung & Impedanzregelung kann aufweisen: Direkte Kraftregelung mit Erzeugung von Sollkräften basierend auf Sensor-Feedback; Indirekte KraftRegelung (Impedanz) mit Modellierung eines virtuellen Feder-Dämpfer-Systems $K$ (Steifigkeit), $C$ (Dämpfung); Hybride Kraft-Bewegungs-Strategie mit Update-Rate, beispielsweise synchron mit Sensor-Sampling. Das Modul Scanmuster-Verwaltung kann aufweisen: Generierung von Rasterpunkten (kartesisches Gitter, hexagonales Muster, etc.); Adaptive Anpassung basierend auf erfassten Oberflächeninformationen; Speicherung von Scan-Metadaten. Das Modul Datenverarbeitung & Punkt-Wolke-Aggregation kann aufweisen: Sammlung aller erfassten Kontaktpunkte; Filterung und Rauschreduktion; Optionale Oberflächenrekonstruktion; Optionales Matching gegen CAD-Modelle. Das Modul Fehlerbehandlung & Logging kann aufweisen: Sensor-Ausfalls-Detektion; Notfall-Stopp-Mechanismen; Auditing und Protokollierung.

Spezifische Software-Architektur-Merkmale betreffend Echtzeit-Anforderungen: Die Kontrolleinrichtung kann dazu ausgelegt und/oder eingerichtet sein Echtzeit-Anforderungen zu erfüllen durch: deterministisch-kontrollierte Sensorsignalverarbeitung, beispielsweise max. Jitter < 10 ms; Kontakterkennung und Aktivierung der Kraftregelung, beispielsweise < 100 ms; Bewegungsregelung (Kraftschleife), beispielsweise mit Zykluszeit $\leq$ 2 ms; Echtzeit-Betriebssystem, z.B. Linux mit PREEMPT_RT, ONX, Windows Real-Time.

Spezifische Software-Architektur-Merkmale betreffend Kalibrierung und Verwaltung: Die Kontrolleinrichtung speichern und/oder aktualisieren: Roboter-Kinematik-Parameter (Denavit-Hartenberg), Kraft-Sensor-Offsets und Orientierung, Endeffektor-Geometrie-Parameter und/oder Schwellenwert-Einstellungen für Kontakterkennung. Diese Parameter können kalibriert werden durch interaktive Prozeduren oder automatische Verfahren.

Der Endeffektor kann dazu ausgelegt und/oder angeordnet sein, Kontakte mit einer Objektoberfläche zu suchen und/oder zu erkennen. Der Endeffektor kann zum Punktkontakt und/oder Flächenkontakt ausgelegt und/oder angeordnet sein. Der Endeffektor kann eine Kontaktspitze und/oder eine Kontaktfläche aufweisen. Die Kontaktspitze und/oder eine Kontaktfläche können/kann an der Endeffektoroberfläche oder Roboterelementoberfläche angeordnet sein. Die Kontaktfläche kann mehrfach gekrümmt, insbesondere kugel- oder kugelsegmentförmig, sein. Der Endeffektor kann ein Tastwerkzeug oder eine Tastspitze sein. Der Endeffektor kann ein Werkzeug, insbesondere ein Werkzeug zur kontaktintensiven Oberflächenbearbeitung, beispielsweise zur spanenden Oberflächenbearbeitung, wie Schleifen oder Polieren, oder zum Kleben, sein.

Der Roboter kann Antriebe aufweisen. Die Antriebe können zum Verstellen der Gelenke ausgelegt und/oder angeordnet sein. Der Roboter weist wenigstens einen Sensor auf. Der Roboter kann mehrere Sensoren aufweisen. Die Sensoren können an und/oder entlang der Gliederkette und/oder kinematischen Kette angeordnet sein. Der Roboter kann wenigstens einen an der Basis angeordneten Sensor und/oder wenigstens einen an einem Glied, insbesondere an dem Endeffektor, angeordneten Sensor aufweisen. Die Sensoren können dazu ausgelegt und/oder angeordnet sein, eine Stellung und/oder ein Verstellen der Gelenke zu erfassen. Die Sensoren können dazu ausgelegt und/oder angeordnet sein, an und/oder entlang der Gliederkette und/oder kinematischen Kette, insbesondere an der Basis und/oder an dem Endeffektor, wirkende Kräfte und/oder Drehmomente zu erfassen. Die Sensoren können zur roboterpropriozeptiven und/oder roboterintrinsischen Erfassung ausgelegt und/oder angeordnet sein. Die Sensoren können dazu ausgelegt und/oder angeordnet sein, Kraft- und/oder Drehmomentsignale bereitzustellen. Die Sensoren können dazu ausgelegt und/oder angeordnet sein, Weg- und/oder Winkelsignale bereitzustellen. Die Sensoren können zur redundanten Bereitstellung, insbesondere zur vollständig redundanten Bereitstellung, von Kraft-, Drehmoment-, Weg- und/oder Winkelsignalen ausgelegt und/oder angeordnet sein. Die Sensoren können zum kontrollierten Bewegen des Roboterarms und/oder Manipulators erforderliche, insbesondere zwingend erforderliche, Sensoren sein. Die Sensoren können zum kontrollierten Verstellen der Gelenke erforderliche, insbesondere zwingend erforderliche, Sensoren sein. Die Sensoren können in den Roboter integriert und/oder integraler Bestandteil des Roboters sein. Die Sensoren können auch als "Sensoren des Roboters" bezeichnet werden. Die Bezeichnung "Sensoren des Roboters" wird vorliegend insbesondere zur Abgrenzung von externen und/oder optionalen Sensoren verwendet, die zum kontrollierten Bewegen des Roboterarms und/oder Manipulators bzw. zum kontrollierten Verstellen der Gelenke nicht erforderlich, insbesondere nicht zwingend erforderlich, sind.

Der Roboter kann eine elektronische Kontrolleinrichtung aufweisen. Die Kontrolleinrichtung kann programmierbar sein. Die Kontrolleinrichtung kann wenigstens einen Prozessor, wenigstens einen Arbeitsspeicher, wenigstens einen Datenspeicher, wenigstens einen Signaleingang und/oder wenigstens einen Signalausgang aufweisen. Die Sensoren können mit der Kontrolleinrichtung signalübertragend verbunden sein. Der Kontrolleinrichtung können von den Sensoren bereitgestellte Signale zur Verfügung stehen. Die Kontrolleinrichtung kann dazu ausgelegt und/oder angeordnet sein, von den Sensoren bereitgestellte Signale zu verarbeiten. Die Kontrolleinrichtung kann dazu ausgelegt und/oder angeordnet sein, unter Berücksichtigung von oder basierend auf Signalen der Sensoren Kraft- und/oder Drehmomentinformationen zu ermitteln und/oder bereitzustellen. Die Kontrolleinrichtung kann dazu ausgelegt und/oder angeordnet sein, unter Berücksichtigung von oder basierend auf Signalen der Sensoren Weg- und/oder Winkelinformationen zu ermitteln und/oder bereitzustellen. Die Kontrolleinrichtung kann dazu ausgelegt und/oder angeordnet sein, den Roboter unter Berücksichtigung der oder basierend auf den von den Sensoren bereitgestellten Signale zu kontrollieren. Die Kontrolleinrichtung kann dazu ausgelegt und/oder angeordnet sein, das erfindungsgemäße Computerprogramm auszuführen.

Das erfindungsgemäße Computerprogramm ist zum robotergestützten Scannen eines dreidimensionalen Objekts ausgelegt und umfasst Programmcodeabschnitte, mit denen das erfindungsgemäße Verfahren ausführbar ist, wenn das Computerprogramm auf einer Kontrolleinrichtung des Roboters ausgeführt wird. Das erfindungsgemäße Verfahren kann in dem Computerprogramm implementiert oder implementierbar sein. Das Computerprogramm kann auf einer Kontrolleinrichtung des Roboters installiert oder installierbar sein. Das Computerprogramm kann auf einer Kontrolleinrichtung des Roboters ausgeführt oder ausführbar sein. Das Computerprogramm kann als Computerprogrammprodukt vorliegen. Das Computerprogramm kann auf einem Datenträger und/oder in übertragbarer Form vorliegen. Das Computerprogramm kann als installierbare und/oder ausführbare Datei vorliegen. Das Computerprogramm kann dazu ausgelegt sein, in einen Arbeitsspeicher einer Kontrolleinrichtung des Roboters geladen und/oder mithilfe der Kontrolleinrichtung ausgeführt zu werden.

Das Computerprogramm kann Programmcodeabschnitte umfassen, die wenigstens eine der folgenden Funktionalitäten implementieren (vgl. auch Abs. [0058] ff.): Sensorsignal-Acquisition, Kontakterkennung, Roboter-Kinematik, Kontakt-Lokalisierung, Kraftregelung und Impedanzregelung, Scanmuster-Verwaltung, Datenverarbeitung und Punkt-Wolke-Generierung, CAD-Matching und Objektidentifikation und/oder Fehlerbehandlung und Logging. Die Programmcodeabschnitte können folgende Datenstrukturen nutzen: ContactPoint, beispielsweise Struktur mit $\{x,y,z,F_x,F_y,F_z,n_x,n_y, n_z, t,\text{confidence}\}$; PointCloud, beispielsweise Liste oder Array von ContactPoints; SensorData, beispielsweise Struktur mit $\{F, M, \theta, t\}$ (Zeitreihe); TransformationMatrix, beispielsweise 4×4 homogene Matrix für Kinematik; ConfigParameters, beispielsweise Struktur mit Schwellenwerten, Kalibrierungen, etc. Die Programmcodeabschnitte können Programmierschnittstellen (APIs) nutzen.

Zusammenfassend und mit anderen Worten dargestellt ergibt sich somit durch die Erfindung unter anderem ein robotergestütztes dreidimensionales taktiles Scannen. Die Idee basiert auf der Verwendung einer Kontaktstelle eines Roboter-Endeffektors zum Scannen dreidimensionaler Objekte. Ein Verfahrensschritt besteht darin, physisch mit dem Werkstück zu interagieren. Dies kann mit verschiedenen Bewegungsstrategien realisiert werden. Beispielsweise können vertikale Sondierungsbewegungen in Richtung einer angenommenen Lokalisierung des Objekts bzw. Werkstücks ausgeführt werden, beginnend an Punkten in einer benutzerdefinierten gitterartigen Anordnung. Es kann davon ausgegangen werden, dass die Geometrie des Endeffektors bzw. Roboterwerkzeugs vollständig bekannt ist, was eine realistische Annahme ist. Der Roboter kann eine Kontaktpunktlokalisierung und Kraftmessinformationen des Roboters nutzen. Dies können nur Drehmomentsensoren, Kraft-Drehmomentsensoren am Endeffektor des Roboters, Kraft-Drehmomentsensoren an der Basis des Roboters und/oder eine beliebige Kombination dieser genannten Elemente oder Bauteile/- gruppen sein. Wenn das System über eine vollständige Redundanz der Kraft-Drehmoment-Messung verfügt, ermöglicht dies eine genauere Kontaktlokalisierung und eine gleichzeitige Interaktion einer Person mit dem Roboter während des Betriebs. In diesem Sinne könnte der Prozess des Scannens gekrümmter Oberflächen vollautomatisch oder unter menschlicher Anleitung erfolgen.

Der Roboter kann sich vertikal bewegen, bis eine physische Interaktion ausgelöst wird und Kontaktpunkte sammeln. Beengte Räume und Bereiche können erkundet werden. Da das vorgeschlagene Verfahren auf taktilen Informationen basiert, kann damit ein begrenzter Bereich mithilfe von Kontaktkräfte detailliert gescannt werden. Der Roboter kann einen begrenzten Raum mithilfe der Kontaktpunktposition durch taktile Fähigkeit scannen.

Der Kontaktpunkt kann sich in Bezug auf ein Roboterwerkzeug und das gescannte Objekt ändern. Der Roboter kann eine sequenzielle rasterförmige Bewegung ausführen, um ein halbzylinderförmiges Objekt zu scannen, und der Kontaktpunkt und die damit verbundenen Kräfte können erfasst werden. Dies kann eine diskrete Annäherung an die Oberfläche liefern.

Um glattere Ergebnisse für die Oberflächenrekonstruktionen zu erhalten, kann der Roboter eine hybride Kraft-Impedanz-Methode anwenden, um kontinuierlich auf der Objektoberfläche zu gleiten, indem er eine gewünschte Kraft in Normalenrichtung angibt. Beziehungen zwischen den Punkten können verwendet werden, um die Oberflächennormale zu erhalten, und der Prozess kann erneut ausgeführt werden, um die geschätzte Oberflächennormale zu verfeinern und möglicherweise eine Oberflächenreibung zu schätzen. Diese Informationen können auf einfache Weise verwendet werden, um geomatische Standardmerkmale wie Ebenen zu schätzen und anzupassen. Es kann eine hybride Kraft-Bewegungs-Strategie angewendet werden.

Die geschätzte Oberflächenform kann außerdem zur Anpassung einer Abtastbewegung und eines Rasters oder einer kontinuierlichen Bewegung verwendet werden, sodass die Abtastung der Oberfläche effektiver erfolgen kann. Beispielsweise können Abtastbewegungen nicht nur vertikal ausgeführt werden, sondern auch an den Richtungen der Normalen der geschätzten Oberfläche ausgerichtet werden. Der Kontaktpunkt und der Kraftvektor können sich entlang der Oberfläche ändern. Beispielsweise kann unter Verwendung der externen Kraftschätzung und des Kontaktpunkts entlang des Roboterwerkzeugs eine Punktwolke einer geschlossenen Form erzeugt werden.

Wenn die Geometrie eines Objekts aus einem CAD-Modell oder einem vorherigen taktilen Scan bekannt ist, kann das vorgeschlagene Verfahren vom Roboter selbst verwendet werden, um Objekte im Arbeitsbereich zu lokalisieren. Tastpunkte können wie beschrieben gesammelt werden, und es kann ein geomatischer Abgleich durchgeführt werden, um die Lage des bekannten Objekts abzugleichen. Das Objekt kann anhand zufällig ausgewählter Punkte korrekt lokalisiert werden. Mit dem vorgeschlagenen Verfahren kann beispielsweise eine gekrümmte Struktur kartiert werden. Die generierten Punkte können direkt für eine Oberflächenrekonstruktion verwendet werden.

Mit dem vorgeschlagenen Verfahren können beliebige Oberflächen gescannt werden, indem die Kontaktpunkte und Normalen auf Grundlage taktiler Informationen erfasst werden. Diese Informationen sind häufig für viele industrielle Anwendungen erforderlich, wenn vollständige oder teilweise geometrische Informationen benötigt werden, insbesondere bei berührungsintensiven Aufgaben wie der Oberflächenbearbeitung, z. B. Schleifen, Polieren, Kleben usw. Darüber hinaus kann die Lokalisierung von Objekten innerhalb eines Arbeitsbereichs des Roboters mithilfe intrinsischer Messungen eine sehr nützliche Funktion sein, die keine zusätzlichen Bauteile erfordert.

Mit der Erfindung werden/wird eine Funktionalität, eine Flexibilität und/oder eine Prozessqualität erhöht und/oder ein Aufwand, wie Bauaufwand, Zeitaufwand und/oder Prozessaufwand, reduziert. Es kann ein einfaches und direktes Verfahren zur Erstellung eines digitalen Abbilds eines Objekts bereitgestellt werden, ohne dass zusätzliche Elemente oder Bauteile/-gruppen erforderlich sind. Der Roboter kann eine Kontaktstelle präzise ertasten und die entsprechenden 3D-Punkte präzise erfassen, und zwar ausschließlich auf Grundlage redundanter, hochauflösender Kraft-Drehmoment-Messungen. Kontaktpunkte mit der Umgebung und zugehörige Kontaktnormalen können dann durch Rekonstruktion ein Oberflächenmodell eines unbekannten Objekts bilden. Ein Objekt oder Werkstück kann vor und/oder während eines Oberflächenbearbeitungsprozesses automatisch gescannt werden, um eine tatsächliche Position und Geometrie zu erhalten. Darüber hinaus kann ein unvollständig bekanntes Objekt, das von anderen Sensormodalitäten, z. B. Stereovision, erhalten wurde, mithilfe taktiler Informationen vervollständigt und verfeinert werden. Darüber hinaus können die taktilen Informationen mit einer groben Kenntnis eines CAD-Modells verwendet werden, um die gescannte Umgebung geometrisch abzugleichen, d. h. ein Objekt oder Werkstück mit bekannter Form zu lokalisieren. Im Allgemeinen kann der Ansatz auf jeden Roboter erweitert werden, der über intrinsische taktile Erfassungsfähigkeiten verfügt.

Nachfolgend werden Ausführungsbeispiele der Erfindung unter Bezugnahme auf Figuren näher beschrieben, dabei zeigen schematisch und beispielhaft:

Fig. 1    ein Erfassen von Kontaktinformationen mit transversal zu einer ebenen Objektoberfläche rasterförmig sequentiell wiederholt ausgeführten Sondierungsbewegungen,

Fig. 2    ein Erfassen von Kontaktinformationen mit transversal zu einer mehrfach gekrümmten Objektoberfläche rasterförmig sequentiell wiederholt ausgeführten Sondierungsbewegungen,

Fig. 3    ein Scannen einer Kavität, erfasste Kontaktpunkte und ein basierend auf den Kontaktpunkten erstelltes, angepasst oder verbessert mathematisches Modell der Kavität,

Fig. 4    ein Scannen einer halbkugelförmig gekrümmten Objektoberfläche mit transversal zur Objektoberfläche rasterförmig sequentiell wiederholt ausgeführten Sondierungsbewegungen,

Fig. 5 für an einer halbkugelförmig gekrümmten Objektoberfläche erfasste Kontaktpunkte ermittelte Oberflächennormale,

Fig. 6 ein Scannen einer Kavität mit einem kugelförmigen Tastwerkzeug und kraftgeregelt kontinuierlich gleitend ausgeführter Sondierungsbewegung und eine Punktwolke als Scanergebnis,

Fig. 7 ein als mathematisches Modell vorliegendes Objekt, zufällig ausgewählte Kontaktpunkte und eine im Matching-Verfahren ermittelte Objektposition,

Fig. 8 ein Kartieren eines Objekts mit gekrümmter Objektoberfläche und

Fig. 9 eine auf generierten Punkten basierende Oberflächenrekonstruktion eines Objekts.

Fig. 1 zeigt ein taktiles Scannen eines dreidimensionalen Objekts 100 mithilfe eines Roboters 102, wobei Sondierungsbewegungen ausgeführt werden, indem ein als Endeffektor 104 verwendetes Tastwerkzeug zunächst in transversaler Richtung 106 zu einem ebenen Abschnitt einer Oberfläche des Objekts 100 geführt wird, um Kontakt mit der Objektoberfläche zu suchen. Während dem Ausführen der Sondierungsbewegung werden vom Roboter bereitgestellte Kraft- und/oder Drehmomentinformationen verwendet, um einen Kontakt zu erkennen. An einem erkannten Kontaktpunkt 108 werden dann Kontaktinformationen erfasst bzw. ermittelt. Nachfolgend wird das Tastwerkzeug rasterförmig in einer Tastrichtung 110 weitergeführt und erneut ein Kontakt mit der Objektoberfläche gesucht. Dieser Vorgang wird für eine Vielzahl von weiteren Kontaktpunkten, wie Kontaktpunkten 112, 114, sequentiell wiederholt.

Fig. 2 zeigt ein Erfassen von Kontaktinformationen mit transversal zu einem mehrfach gekrümmten Abschnitt einer Oberfläche eines Objekts 200 ausgeführten Sondierungsbewegungen, an einem Kontaktpunkt 202 und weiteren Kontaktpunkten 204, 206. Im Übrigen wird ergänzend insbesondere auf Fig. 1 und die zugehörige Beschreibung verwiesen.

Fig. 3 zeigt ein Scannen einer Kavität eines Objekts 300, erfasste Kontaktpunkte 302 und ein basierend auf den Kontaktpunkten 302 erstelltes, angepasst oder verbessert mathematisches bzw. digitales Modell 304 der Kavität. Im Übrigen wird ergänzend insbesondere auf Fig. 1 und die zugehörige Beschreibung verwiesen.

Fig. 4 zeigt ein Scannen einer halbkugelförmig gekrümmten Oberfläche eines Objekts 400 mit transversal zur Objektoberfläche rasterförmig sequentiell wiederholt ausgeführten Sondierungsbewegungen. Dabei werden an Kontaktpunkten, wie Kontaktpunkten 402, 404, 406, 408, Kontaktinformationen erfasst bzw. ermittelt. Im Übrigen wird ergänzend insbesondere auf Fig. 1 und die zugehörige Beschreibung verwiesen.

Unter Berücksichtigung der Kontaktinformationen werden dann als weitere Kontaktinformationen Oberflächennormalen ermittelt. Fig. 5 zeigt die an der Objektoberfläche für die Kontaktpunkte 402, 404, 406, 408 ermittelten Oberflächennormalen 410, 412, 414, 416. Entsprechend werden Oberflächennormalen 418, 420, 422, 424 für weitere Kontaktpunkte 426, 428, 430, 432 ermittelt.

Fig. 6 zeigt ein Scannen einer Kavität eines Objekts 500 mit einem Tastwerkzeug mit kugelförmiger Kontaktfläche als Endeffektor 502. Eine Sondierungsbewegung wird kraftgeregelt entlang der Oberfläche des Objekts 500 kontinuierlich gleitend ausgeführt. Bei einem Übergang von einem ersten Oberflächenabschnitt 504 zur einem zweiten Oberflächenabschnitt 506 mit von dem ersten Oberflächenabschnitt 504 abweichenden Ausrichtung ändert sich der Kontaktpunkt 508 an dem Tastwerkzeug. Währen dem Ausführen der Sondierungsbewegung werden Kontaktinformationen erfasst bzw. ermittelt und eine Punktwolke als Scanergebnis 510 ermittelt.

Fig. 7 zeigt ein als mathematisches bzw. geometrisches Modell 600 vorliegendes Objekt, durch Scannen eines realen Objekts zufällig ausgewählte Kontaktpunkte 602 und eine im Matching-Verfahren ermittelte Objektposition 604.

Mit Fig. 8 und Fig. 9 ist ein Kartieren eines Objekts 700 mit gekrümmter Objektoberfläche gezeigt. Basierend auf Punkten 702, die durch taktiles Scannen der Objektoberfläche mithilfe eines Roboters 704 und eines Tastwerkzeugs als Endeffektor 706 wie in Fig. 8 dargestellt generiert werden, wird als Scanergebnis 708 eine Oberflächenrekonstruktion des Objekts 700 erstellt.

Bezugszeichen

| | |
|---|---|
| 100 | Objekt |
| 102 | Roboter |
| 104 | Endeffektor |
| 106 | transversale Richtung |
| 108 | Kontaktpunkt |

110     Tastrichtung
112     weiterer Kontaktpunkt
114     weiterer Kontaktpunkt

200     Objekt
202     Kontaktpunkt
204     weiterer Kontaktpunkt
206     weiterer Kontaktpunkt

300     Objekt
302     Kontaktpunkt
304     mathematisches Modell

400     Objekt
402     Kontaktpunkt
404     Kontaktpunkt
406     Kontaktpunkt
408     Kontaktpunkt
410     Oberflächennormale
412     Oberflächennormale
414     Oberflächennormale
416     Oberflächennormale
418     Kontaktpunkt
420     Kontaktpunkt
422     Kontaktpunkt
424     Kontaktpunkt
426     Oberflächennormale
428     Oberflächennormale
430     Oberflächennormale
432     Oberflächennormale

500     Objekt
502     Endeffektor
504     erster Oberflächenabschnitt
506     zweiter Oberflächenabschnitt
508     Kontaktpunkt
510     Scanergebnis

600     mathematisches Modell
602     Kontaktpunkte
604     Objektposition

700     Objekt
702     Punkte
704     Roboter
706     Endeffektor
708     Scanergebnis

**Patentansprüche**

1.  Verfahren zum robotergestützten Scannen eines dreidimensionalen Objekts (100, 200, 300, 400, 500, 700), **dadurch gekennzeichnet, dass** eine Sondierungsbewegung ausgeführt wird, um Kontakt mit einer Objektoberfläche zu suchen, während dem Ausführen der Sondierungsbewegung vom Roboter (102, 704) bereitgestellte Kraft- und/oder Drehmomentinformationen verwendet werden, um einen Kontakt zu erkennen, nach Erkennen eines Kontakts Kontaktinformationen erfasst und/oder ermittelt werden und unter Berücksichtigung erfasster und/oder ermittelter Kontaktinformationen ein Scanergebnis (510, 708) ermittelt wird.

2.  Verfahren nach Anspruch 1, **dadurch gekennzeichnet, dass** die Kontaktinformationen Kontaktpositionen, Kontaktkräfte und/oder Kontaktmomente umfassen.

3. Verfahren nach wenigstens einem der vorhergehenden Ansprüche, **dadurch gekennzeichnet, dass** unter Berücksichtigung erfasster und/oder ermittelter Kontaktinformationen Oberflächennormalen (410, 412, 414, 416, 426, 428, 430, 432) ermittelt werden.

4. Verfahren nach wenigstens einem der vorhergehenden Ansprüche, **dadurch gekennzeichnet, dass** die Sondierungsbewegung bis zum Erkennen eines Kontakts transversal und/oder nach Erkennen eines Kontakts tangential zur Objektoberfläche ausgeführt wird.

5. Verfahren nach wenigstens einem der vorhergehenden Ansprüche, **dadurch gekennzeichnet, dass** Sondierungsbewegungen einer Bewegungsstrategie folgend ausgeführt werden.

6. Verfahren nach Anspruch 5, **dadurch gekennzeichnet, dass** die Bewegungsstrategie im Hinblick auf ein zu scannendes Objekt (100, 200, 300, 400, 500, 700) ausgewählt und/oder unter Berücksichtigung des Scanergebnisses (510, 708) angepasst wird.

7. Verfahren nach wenigstens einem der vorhergehenden Ansprüche, **dadurch gekennzeichnet, dass** beim Erkennen des Kontakts und/oder beim Ermitteln der Kontaktinformationen und/oder des Scanergebnisses (510, 708) Eigenschaften des Roboters (102, 704), des Objekts (100, 200, 300, 400, 500, 700), der Objektoberfläche, und/oder des Kontakts berücksichtigt werden.

8. Verfahren nach wenigstens einem der vorhergehenden Ansprüche, **dadurch gekennzeichnet, dass** beim Erkennen des Kontakts und/oder beim Ermitteln der Kontaktinformationen und/oder des Scanergebnisses (510, 708) eine Schätzfunktion der mathematischen Statistik verwendet wird.

9. Verfahren nach wenigstens einem der vorhergehenden Ansprüche, **dadurch gekennzeichnet, dass** unter Berücksichtigung des Scanergebnisses (510, 708) ein Modell des Objekts (100, 200, 300, 400, 500, 700) erstellt und/oder angepasst wird.

10. Verfahren nach wenigstens einem der vorhergehenden Ansprüche, **dadurch gekennzeichnet, dass** unter Berücksichtigung des Scanergebnisses (510, 708) das Objekt (100, 200, 300, 400, 500, 700) identifiziert und/oder lokalisiert wird.

11. Roboter (102, 704) mit wenigstens einem Kraft- und/oder Drehmomentsensor und einer Kontrolleinrichtung, **dadurch gekennzeichnet, dass** der Roboter (102, 704) zum Ausführen eines Verfahrens nach wenigstens einem der Ansprüche 1 bis 10 ausgelegt und/oder angeordnet ist.

12. Computerprogramm zum robotergestützten Scannen eines dreidimensionalen Objekts (100, 200, 300, 400, 500, 700), **dadurch gekennzeichnet, dass** das Computerprogramm Programmcodeabschnitte umfasst, mit denen ein Verfahren nach wenigstens einem der Ansprüche 1 bis 10 ausführbar ist, wenn das Computerprogramm auf einer Kontrolleinrichtung eines Roboters (102, 704) ausgeführt wird.

Fig. 1

Fig. 2

Fig. 3

Fig. 4

Fig. 5

Fig. 6

Fig. 7

Fig. 8

Fig. 9

# EP 4 786 117 A1

**EUROPÄISCHER RECHERCHENBERICHT**

Nummer der Anmeldung

EP 26 15 5804

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2024/228962 A2 (GRAYMATTER ROBOTICS INC [US]) 7. November 2024 (2024-11-07) * Absätze [0136] - [0139], [0209] - [0222] * ----- | 1-12 | INV. B25J9/16 G05B19/42 |

**RECHERCHIERTE SACHGEBIETE (IPC)**

B25J
G05B

Der vorliegende Recherchenbericht wurde für alle Patentansprüche erstellt

| Recherchenort | Abschlußdatum der Recherche | Prüfer |
|---|---|---|
| Den Haag | 12. Juni 2026 | Prokopiou, Platon |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 26 15 5804

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2026

| Im Recherchenbericht angeführtes Patentdokument | Datum der Veröffentlichung | Mitglied(er) der Patentfamilie | Datum der Veröffentlichung |
|---|---|---|---|
| WO 2024228962 A2 | 07-11-2024 | EP 4688347 A2 | 11-02-2026 |
| | | KR 20250169588 A | 03-12-2025 |
| | | WO 2024228962 A2 | 07-11-2024 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021113636 B3

**In der Beschreibung aufgeführte Nicht-Patentliteratur**

- **M. ISKANDAR** ; **C. OTT** ; **A. ALBU-SCHÄFFER** ; **B. SICILIANO** ; **A. DIETRICH**. Hybrid Force-Impedance Control for Fast End-Effector Motions. *IEEE Robotics and Automation Letters*, July 2023, vol. 8 (7), 3931-3938